# EUROPEAN PATENT APPLICATION

(11) **EP 4 257 270 A1**
(43) Date of publication of application: **11.10.2023**
(21) Application number: 22020151.1
(22) Date of filing: 05.04.2022
(51) Int. Cl.: B22F 10/28, B22F 10/32, B33Y 10/00, C22C 1/04, C22C 19/00, C22C 19/05

(54) **METHOD AND SYSTEM FOR GENERATING A THREE-DIMENSIONAL WORKPIECE**

(71) Applicant: Linde GmbH, 82049 Pullach (DE)
(72) Inventor: FORET, Pierre, 82049 Pullach (DE); HYHRA, Eduard, 82049 Pullach (DE)
(74) Representative: Gellner, Bernd

(57) **Abstract**

The invention relates to a method for producing a three-dimensional workpiece from a nickel-based superalloy powder by a powder bed fusion process, wherein the superalloy powder contains boron and/or zirconium. The powder bed fusion process is carried out in a controlled atmosphere which contains less than 25 vppm oxygen.

## Description

The present invention relates to a method for producing a three-dimensional workpiece from a nickel-based superalloy powder by a powder bed fusion process.

A nickel-based superalloy is a high temperature material which is able to withstand temperatures close to its melting point. Further, it shows advantageous material characteristics, such as mechanical strength, resistance to thermal creep deformation, good surface stability, and resistance to mechanical degradation and to corrosion or oxidation.

Typical nickel-based superalloys contain a high number of different alloying elements. Boron and zirconium are known to have a positive effect on the creep properties of the material.

Selective laser sintering (SLS) is an additive manufacturing (AM) technique that uses a laser as the power source to sinter powdered material, aiming the laser automatically at points in space defined by a 3D model, binding the material together to create a solid structure. It is similar to direct metal laser sintering (DMLS). Both are instantiations of the same concept but differ in technical details. Selective laser melting (SLM) uses a comparable concept, but in SLM the material is fully melted rather than sintered, allowing different properties (crystal structure, porosity, and so on). SLS involves the use of a high power laser (for example, a carbon dioxide laser) to fuse small particles of plastic, metal, ceramic, or glass powders into a mass that has a desired three-dimensional shape. The laser selectively fuses powdered material by scanning cross-sections generated from a 3-D digital description of the part (for example from a CAD file or scan data) on the surface of a powder bed. After each cross-section is scanned, the powder bed is lowered by one layer thickness, a new layer of material is applied on top, and the process is repeated until the part is completed.

Selective laser melting (SLM) is a particular rapid prototyping, 3D printing, or Additive Manufacturing (AM) technique designed to use a high power-density laser to melt and fuse metallic powders together. Often SLM is considered to be a subcategory of Selective Laser Sintering (SLS). The SLM process has the ability to fully melt the metal material into a solid 3D-dimensional part unlike SLS. With selective laser melting, thin layers of atomized fine metal powder are evenly distributed using a coating mechanism onto a substrate plate, usually metal, that is fastened to an indexing table that moves in the vertical (Z) axis. This takes place inside a chamber containing a tightly controlled atmosphere of inert gas, such as argon at oxygen levels below 500 parts per million. Once each layer has been distributed, each 2D slice of the part geometry is fused by selectively melting the powder. This is accomplished with a high-power laser beam, usually an ytterbium fiber laser with hundreds of watts. The laser beam is directed in the X and Y directions with two high frequency scanning mirrors. The laser energy is intense enough to permit full melting (welding) of the particles to form solid metal. The process is repeated layer after layer until the part is complete.

Electron-beam additive manufacturing or electron-beam melting (EBM) is a type of additive manufacturing, or 3D printing, for metal parts. The raw material (metal powder or wire) is placed under a vacuum and fused together from heating by an electron beam. This technique is distinct from selective laser sintering as the raw material fuses having completely melted. Metal powders can be consolidated into a solid mass using an electron beam as the heat source. Parts are manufactured by melting metal powder, layer by layer, with an electron beam in a high vacuum. This powder bed method produces fully dense metal parts directly from metal powder with characteristics of the target material. The EBM machine reads data from a 3D CAD model and lays down successive layers of powdered material. These layers are melted together utilizing a computer-controlled electron beam. In this way it builds up the parts. The process takes place under vacuum, which makes it suited to manufacture parts in reactive materials with a high affinity for oxygen, e.g. titanium. The process is known to operate at higher temperatures (up to 1000 °C), which can lead to differences in phase formation though solidification and solid-state phase transformation.

Direct metal laser sintering (DMLS) is an additive manufacturing metal fabrication technology, occasionally referred to as selective laser sintering (SLS) or selective laser melting (SLM), that generates metal prototypes and tools directly from computer aided design (CAD) data. It is unique from SLS or SLM because the process uses a laser to selectively fuse a fine metal powder. DMLS uses a variety of alloys, allowing prototypes to be functional hardware made out of the same material as production components. Since the components are built layer by layer, it is possible to design organic geometries, internal features and challenging passages that could not be cast or otherwise machined. DMLS produces strong, durable metal parts that work well as both functional prototypes or end-use production parts. The DMLS process begins with a 3D CAD model whereby a .stl file is created and sent to the machine's computer program. The DMLS machine uses a high-powered Yb-fiber optic laser. Inside the build chamber area, there is a material dispensing platform and a built platform along with a recoater blade used to move new powder over the built platform. The technology fuses metal powder into a solid part by melting it locally using the focused laser beam. Parts are built up additively layer by layer, typically using layers 20 micrometers thick.

When nickel-based superalloys are processed by one of these additive manufacturing processes the superalloy suffers from hot cracking or microcracking, that means cracks are formed in the microstructure during the additive manufacturing process. The microcracking phenomenon is not fully understood. But the more the superalloy is alloyed with zirconium and/or boron, the more cracking occurs.

There are nickel-based superalloys on the market which are not alloyed with zirconium and boron. Without these two elements the superalloy is printable, that means you can process it by additive manufacturing, but it does not have the desired high creep properties.

Therefore, it is an object of the present invention to provide an improved additive manufacturing process which allows to print nickel-based superalloy powder containing boron and/or zirconium.

This object is achieved by a method according to claim 1.

It is assumed that oxidation of boron and/or zirconium contributes to the hot cracking effect. Therefore, the present invention proposes to carry out the additive manufacturing process in a controlled atmosphere with an extremely low oxygen content and in particular in an atmosphere containing less than 25 vppm oxygen. The low oxygen level will avoid the risk of oxidation of boron (B) and zirconium (Zr) during printing and lead to a crack free material.

The minimum oxygen level depends on the design of the printer and on the design of the process chamber of the printer and especially how tight it is. With respect to the hot cracking issue it would even be preferable to have an oxygen content in the controlled atmosphere of less than 20 vppm oxygen, less than 15 vppm oxygen or less than 10 vppm oxygen.

In the following, the terms "printing" and "additive manufacturing" are used as synonyms unless explicitly stated otherwise.

The invention is especially advantageous for additively manufacturing a nickel-based superalloy essentially consisting of:
- about 0.09% to about 0.2% carbon,
- about 8% to about 11 % cobalt,
- about 15% to about 18% chromium,
- about 0.75% to about 2.2% molybdenum,
- about 1.8% to about 3% tungsten,
- about 1% to about 3% tantalum,
- about 0.5% to about 2% niobium,
- about 3% to about 4% aluminum,
- about 3% to about 4% titanium with the total content of aluminum and titanium not exceeding about 7.5%,
- about 0.005% to about 0.05% boron,
- about 0.01% to about 0.2% zirconium,
- not more than 0,05% iron, not more than 0,02% manganese, not more than 0,3% silicon, not more than 0,015% sulfur
- and the balance essentially nickel.

A particular embodiment of the above-identified superalloy composition is known as High Carbon Inconel 738 and it essentially consists of
- 0.15% to 0.2% carbon, 8% to 9% cobalt,
- 15.7% to 16.3% chromium,
- 1.5% to 2% molybdenum,
- 2.4% to 2.8% tungsten,
- 1.5% to 2% tantalum,
- 0.6% to 1.1% niobium,
- 3.2% to 3.7% aluminum,
- 3.2% to 3.7% titanium with the total content of aluminum and titanium between 6.5 and 7.2%,
- 0.005% to 0.015% boron,
- 0.05% to 0.15% zirconium,
- not more than 0,05% iron, not more than 0,02% manganese, not more than 0,3% silicon, not more than 0,015% sulfur
- and the balance essentially nickel.

Another advantageous superalloy composition is known as Low Carbon Inconel 738 (IN-738LC) and it essentially consists of
- 0.09% to 0.13% carbon,
- 8% to 9% cobalt,
- 15.7% to 16.3% chromium,
- 1.5% to 2% molybdenum,
- 2.4% to 2.8% tungsten,
- 1.5% to 2% tantalum,
- 0.6% to 1.1% niobium,
- 3.2% to 3.7% aluminum,
- 3.2% to 3.7% titanium with the total content of aluminum and titanium between 6.5 and 7.2%,
- 0.007% to 0.012% boron,
- 0.03% to 0.08% zirconium,
- not more than 0,05% iron, not more than 0,02% manganese, not more than 0,3% silicon, not more than 0,015% sulfur
- and the balance essentially nickel.

It has been found critical to have a very low oxygen concentration during the additive manufacturing process. The oxygen concentration in the controlled atmosphere should be less than 25 ppm by volume (< 25 vppm). Typically, the additive manufacturing process is carried out in a process chamber and the controlled atmosphere is provided within that process chamber.

Such low oxygen concentrations of less than 25 vppm are difficult to achieve in normal 3D printers. In many cases the gas analytic system of a common 3D printer is not able to measure and control the oxygen concentration in the process chamber to such low levels. Therefore, according to a preferred embodiment, part of the atmosphere is withdrawn from the process chamber and the oxygen concentration of the gas is determined outside of the process chamber. The atmosphere within the process chamber is then controlled depending on the determined oxygen concentration. For example, a sample of the process chamber atmosphere is withdrawn, sent to a gas analyzer where the sample is analyzed for oxygen traces and other impurities. Depending on the result of the analysis the gas analyzer controls the oxygen level in the process chamber by purging the process chamber with inert gas if required.

According to an alternative preferred embodiment part of the atmosphere is withdrawn from the controlled atmosphere and replaced by a gas flow of inert gas. For a powder bed fusion process carried out in a process chamber and the controlled atmosphere being provided in that process chamber, an inert gas flow through the process chamber is provided. The gas flow is set or controlled so that the oxygen concentration in the controlled atmosphere is less than 20 vppm, less than 15 vppm or less than 10 vppm.

Preferably the controlled atmosphere essentially consists of argon or helium or hydrogen or a mixture of argon and helium or a mixture of argon and hydrogen, in any case with residual oxygen of less than 25 vppm. The inventor has recognized that helium and hydrogen have the benefit to decrease the creation of by-products such as spatters and fumes. This has the advantage to reduce the amount of defective parts and to reduce the energy needed to melt the powder leading to less risks of distortion.

The invention is especially useful in a laser powder bed process, that is in an additive manufacturing process where a laser is used as heat source for melting the nickel-based superalloy powder. Preferably, the powder bed fusion process is carried out in a process chamber.

Laser powder bed fusion (LPBF) is also known as selective laser melting (SLM) or as direct metal laser sintering (DMLS) as discussed in the introductory part above.

Preferably the additive manufacturing process is a Laser Powder Bed Fusion Process comprising the following steps:
- providing the superalloy powder on a built platform in a process chamber,
- melting the powder with a laser, and
- repeating the aforementioned steps
- wherein the atmosphere within the process chamber is controlled so that the oxygen concentration is below 25 vppm.

The invention is explained below with the aid of an embodiment shown in the drawing.

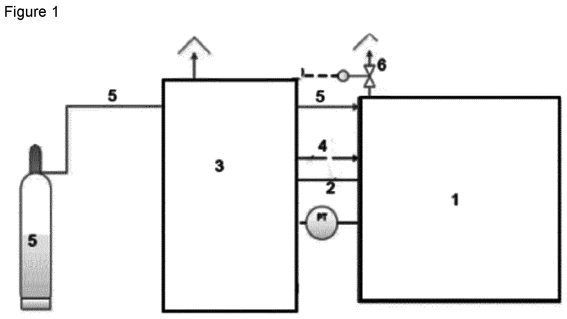

Figure 1 schematically shows a process chamber 1 for producing a workpiece by means of additive manufacturing, in particular by laser powder bed fusion. The finished workpiece is composed of metallurgical layers that are individually produced in succession. The individual metallurgical layers of the workpiece are respectively produced in that the powder is respectively provided for each metallurgical layer and acted upon with a laser beam. This takes place under a controlled gas atmosphere in the process chamber 1. The gas atmosphere in the process chamber 1 consists, for example, of argon that was introduced into the process chamber 1 prior to the beginning of the additive manufacturing process.

The powder used to manufacture the workpiece is a nickel-based superalloy, namely Low Carbon Inconel 738 (IN-738 LC) with a composition of:
- 0.09% to 0.13% carbon,
- 8% to 9% cobalt,
- 15.7% to 16.3% chromium,
- 1.5% to 2% molybdenum,
- 2.4% to 2.8% tungsten,
- 1.5% to 2% tantalum,
- 0.6% to 1.1% niobium,
- 3.2% to 3.7% aluminum,
- 3.2% to 3.7% titanium with the total content of aluminum and titanium between 6.5 and 7.2%,
- 0.007% to 0.012% boron,
- 0.03% to 0.08% zirconium,
- not more than 0,05% iron, not more than 0,02% manganese, not more than 0,3% silicon, not more than 0,015% sulfur
- and the balance essentially nickel.

Such superalloys are difficult to handle in an additive manufacturing process due to the risk of hot cracking. Therefore, the atmosphere in the process chamber is controlled such that the oxygen concentration is less than 25 vppm and preferably less than 10 vppm.

A sample of the gas atmosphere is extracted from the manufacturing chamber 1 in the form of a gas stream 2 and fed to an analyzer 3. The analyzer 3 measures certain parameters, such as the oxygen content and other impurities, of the sample in order to determine if the gas atmosphere is still sufficiently inert and the oxygen concentration is below the 25 vppm threshold or below the 10 vppm threshold, respectively. Otherwise, an undesirable formation of microcracks could take place in the workpiece.

Preferably, the analyzer 3 is a unit that includes gas control, gas analytic systems and an electrical control system. The gas analytic system comprises at least one oxygen probe, preferably two different oxygen probes. Further, the analyzer 3 may include a dew point sensor to monitor the dew point of the sample withdrawn from the process chamber 1. Control valves and pressure sensors hold the pressure in the process chamber on a stable level.

The parameters such as, for example, the water vapor content or the oxygen content of the gas stream 2 are measured and compared with a nominal value in the analyzer 3. For the oxygen content the nominal value is the same as the above-mentioned threshold. If the measured parameters lie below the nominal value, i.e. if the water vapor content or the oxygen content lies below the predefined nominal value, the gas stream 2 is completely returned into the manufacturing chamber 1.

However, if the oxygen content is higher than the nominal value, the gas stream is partially or completely discarded. Instead, an inert gas, in the present example pure argon, is introduced into the process chamber 1. An automatic inert gas/argon supply replaces part of the atmosphere in the process chamber 1 by pure argon whereby ensuring that the oxygen impurities are reduced. The system controls the oxygen level by purging the process chamber 1 with pure argon if required. The pressure in the process chamber 1 is controlled with a pressure sensor and a vent valve 6. Preferably, the pressure in the process chamber 1 is kept constant.

### List of Reference Numbers

- 1: Process chamber
- 2: sample from process chamber to analyzer
- 3: analyzer
- 4: sample from analyzer to process chamber
- 5: argon supply to analyzer and to process chamber
- 6: vent valve

## Claims

1. Method for producing a three-dimensional workpiece from a nickel-based superalloy powder by a powder bed fusion process, wherein the powder bed fusion process is carried out in a controlled atmosphere, **characterized in that** the superalloy powder contains boron and/or zirconium and that the controlled atmosphere contains less than 25 vppm oxygen.

2. Method according to claim 1, wherein the superalloy essentially consists of
about 0.09% to about 0.2% carbon,
about 8% to about 11% cobalt,
about 15% to about 18% chromium,
about 0.75% to about 2.2% molybdenum,
about 1.8% to about 3% tungsten,
about 1% to about 3% tantalum,
about 0.5% to about 2% niobium,
about 3% to about 4% aluminum,
about 3% to about 4% titanium with the total content of aluminum and titanium
not exceeding about 7.5%,
about 0.005% to about 0.05% boron,
about 0.01% to about 0.2% zirconium,
not more than 0,05% iron, not more than 0,02% manganese, not more than 0,3% silicon, not more than 0,015% sulfur and the balance essentially nickel.

3. Method according to claim 2, wherein the superalloy essentially consists of 0.15% to 0.2% carbon, 8% to 9% cobalt, 15.7% to 16.3% chromium, 1.5% to 2% molybdenum, 2.4% to 2.8% tungsten, 1.5% to 2% tantalum, 0.6% to 1.1% niobium, 3.2% to 3.7% aluminum, 3.2% to 3.7% titanium with the total content of aluminum and titanium between 6.5 and 7.2%, 0.005% to 0.015% boron, 0.05% to 0.15% zirconium, not more than 0,05% iron, not more than 0,02% manganese, not more than 0,3% silicon, not more than 0,015% sulfur and the balance essentially nickel.

4. Method according to claim 2, wherein the superalloy essentially consists of 0.09% to 0.13% carbon, 8% to 9% cobalt, 15.7% to 16.3% chromium, 1.5% to 2% molybdenum, 2.4% to 2.8% tungsten, 1.5% to 2% tantalum, 0.6% to 1.1% niobium, 3.2% to 3.7% aluminum, 3.2% to 3.7% titanium with the total content of aluminum and titanium between 6.5 and 7.2%, 0.007% to 0.012% boron, 0.03% to 0.08% zirconium, not more than 0,05% iron, not more than 0,02% manganese, not more than 0,3% silicon, not more than 0,015% sulfur and the balance essentially nickel.

5. Method according to any of claims 1 to 4, **characterized in that** the workpiece is produced by a laser powder bed fusion process.

6. Method according to any of claims 1 to 5, **characterized in that** the controlled atmosphere essentially consists of argon or helium or hydrogen or a mixture of argon and helium or a mixture of argon and hydrogen, in any case with residual oxygen in the controlled atmosphere of less than 25 vppm.

7. Method according to any of claims 1 to 6, **characterized in that** the controlled atmosphere contains less than 20 vppm oxygen, less than 15 vppm oxygen or less than 10 vppm oxygen.

8. Method according to any of the preceding claims, **characterized in that** a part of the atmosphere is withdrawn from the controlled atmosphere, the oxygen concentration of the withdrawn gas is determined and the atmosphere is controlled depending on the determined oxygen concentration.

9. Method according to any of claims 1 to 7, **characterized in that** a part of the atmosphere is withdrawn from the controlled atmosphere and replaced by a gas flow of inert gas, and that the gas flow of inert gas is so high that the oxygen concentration in the controlled atmosphere is less than 20 vppm, less than 15 vppm or less than 10 vppm.

10. Method according to any of the preceding claims, **characterized in that** the powder bed fusion process is carried out in a process chamber.
